# EUROPÄISCHE PATENTSCHRIFT

(11) **EP 0 452 256 B1**
(45) Veröffentlichungstag und Bekanntmachung des Hinweises auf die Patenterteilung: **26.05.1993**
(21) Anmeldenummer: 91810186.6
(22) Anmeldetag: 21.03.1991
(51) Int. Cl.: E04B 2/76, F16B 7/04

(54) **Eckverbindung zweier Profile mit C-förmigem Anschluss mittels eines Eckverbinders und Winkelstück zur Herstellung der Verbindung**
Angular connection of two profiles with a C-shaped prolongation using a connector and an angular element for assembling the connection
Connexion angulaire de deux profilés avec prolongation en C utilisant un connecteur et un élément en angle pour le montage de ladite connexion

(30) Priorität: 11.04.1990 CH 1246/90
(43) Veröffentlichungstag der Anmeldung: 16.10.1991
(73) Patentinhaber: ALUSUISSE-LONZA SERVICES AG, 8034 Zürich (CH)
(72) Erfinder: Faisst, Dieter, CH-8400 Winterthur (CH)

(56) Entgegenhaltungen:
- GB-A- 782 428
- GB-A- 2 007 324
- US-A- 3 669 479

## Beschreibung

Eine Eckverbindung und ein Winkelstück gemäss den Oberbegriffen der Ansprüche 1 und 6 sind aus der DE-PS 2 751 753 bekannt. Die Verbindung wird insbesondere angewandt zur Herstellung von Wagenkastengerippen aus Strangpressprofilen. Die zu verbindenden Profile haben einen oder mehrere C-förmigen Anschlüsse mit zwei parallelen Profilschenkeln und an den freien Schenkelenden angeformten, gegeneinander gerichteten Stegen. Der Eckverbinder hat zwei rechtwinklig zueinander stehende Schenkel, die an den Aussenseiten der Profilstege anliegen. Die Verbinderschenkel haben je zwei Durchgangsbohrungen, durch welche Schrauben gesteckt sind. Die Schrauben sind in Parallelogrammmuttern eingeschraubt, welche mit ihren kurzen Seiten die Profilstege hintergreifen. Dieser bekannte Eckverbinder ermöglicht eine rasche und präzise Montage und hat sich sehr bewährt. Allerdings hat er den Nachteil, dass er in der Richtung senkrecht zur gemeinsamen Ebene der beiden Profile nur geringe Biegekräfte übertragen kann. Wagenkasten, welche mit diesen bekannten Eckverbindern hergestellt sind, sind deshalb in Wagenkastenquerrichtung wenig biegesteif.

Der vorliegenden Erfindung liegt die Aufgabe zugrunde, eine Eckverbindung und ein Winkelstück derart auszubilden, dass über die Eckverbindung grössere Biegemomente übertragen werden können. Diese Aufgabe wird durch die kennzeichnenden Merkmale der Ansprüche 1 und 5 gelöst.

Nachfolgend wird ein Ausführungsbeispiel der Erfindung anhand der Zeichnung erläutert. Darin zeigten
- Fig. 1: eine perspektivische Ansicht einer Eckverbindung,
- Fig. 2: einen Querschnitt durch die Eckverbindung,
- Fig. 3: eine Seitenansicht des Winkelstücks, und
- Fig. 4: einen Schnitt längs der Linie IV - IV in Fig. 3 in vergrössertem Massstab.

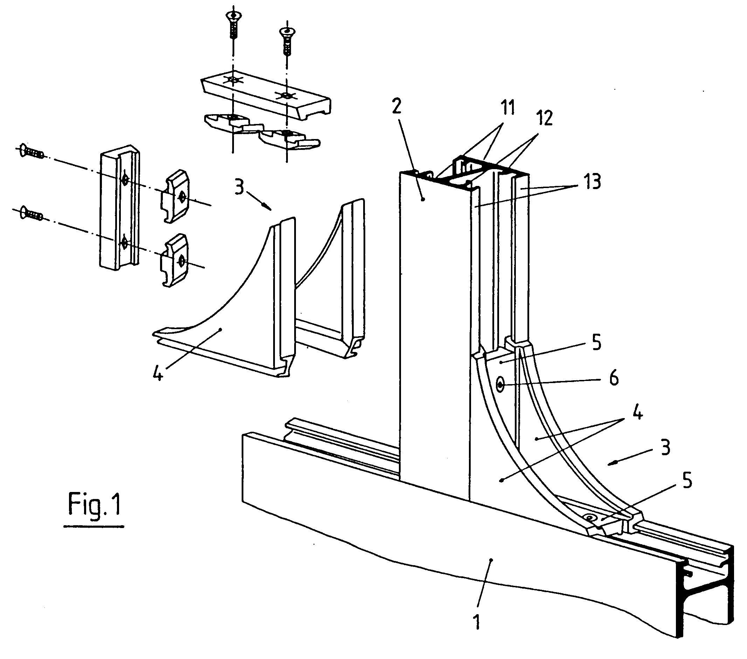

In Fig. 1 ist schematisch eine Eckverbindung zwischen einem durchgehenden, horizontalen ersten Profil 1 und einem stumpf daran anstossenden, vertikalen zweiten Profil 2, z.B. einem Fensterpfosten eines Wagenkastengerippes dargestellt. Die Profile 1, 2 sind zweckmässig aus einer Aluminiumlegierung stranggepresst. Die Verbindung wird mittels zweier Eckverbinder 3 hergestellt, die je aus zwei Winkelplatten 4, zwei Keilschienen 5, vier Schrauben 6 und vier Parallelogrammmuttern 7 bestehen. Das Profil 1 kann z.B. auch den Rand einer Sandwichplatte bilden.

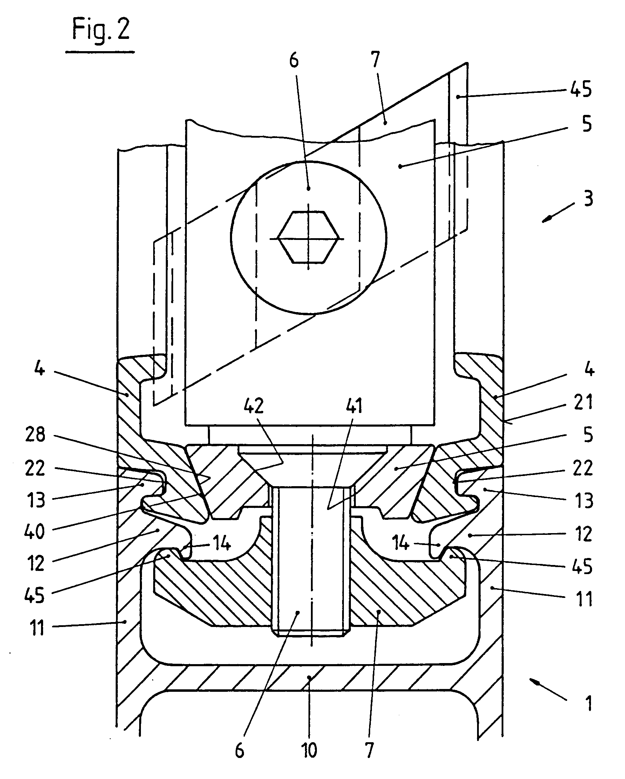

In Fig. 2 ist ein Querschnitt durch die Verbindung nach Fig. 1 dargestellt. Das Profil 1 hat mindestens einen C-förmigen Anschluss mit einer Basis 10, zwei parallelen, daran angeformten Schenkeln 11 und je zwei an den Schenkelenden nach innen ragenden Stegen 12, 13. Die Stege 12 haben an ihren freien Enden eine gegen die Basis 10 gerichtete Nase 14. Die Stege 13 sind gegen ihr freies Ende leicht keilförmig verjüngt.

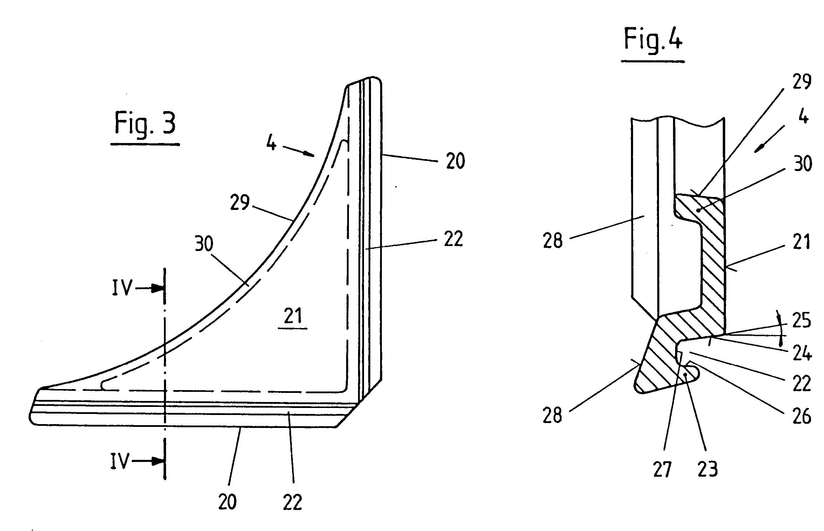

Die Winkelplatten 4 (Fig. 3 und 4) haben längs ihren beiden an den Profilen 1, 2 anliegenden Schenkeln 20 ausgehend von ihrer Aussenseite 21 eine geradlinige Nut 22, die durch eine Leiste 23 abgeschlossen ist. Die Leiste 23 ist gegenüber der Ebene der Aussenfläche 21 zurückversetzt. Die von der Aussenfläche 21 ausgehende Flanke 24 der Nut 22 ist um einen Winkel 25 von etwa 5° gegenüber der Senkrechten zur Aussenfläche 21 geneigt. Die gegenüberliegende Flanke 26 ist annähernd senkrecht zur Ebene der Aussenfläche 21. Der Nutgrund 27 hat von der Aussenfläche 21 einen Abstand, der etwas grösser ist als die Breite des Steges 13. Auf der der Aussenfläche 21 abgewandten Seite hat jeder Schenkel 20 eine parallel zur Nut 22 und um einen Winkel von etwa 20° geneigt zur Aussenfläche 21 verlaufende Keilfläche 28. Die Basis 29 der Winkelplatte 4 ist viertelkreisförmig gebogen und hat eine Verstärkungsrippe 30. Die Winkelplatte 4 wird zweckmässig aus einer Aluminiumlegierung gesenkgeschmiedet. Dadurch kann eine hohe Festigkeit erreicht werden.

Zur Herstellung der Verbindung werden zwei Winkelplatten 4 mit ihren Nuten 22 in die Stege 13 der beiden Profile 1, 2 eingeschoben und anschliessend mit je einer Keilschiene 5 gesichert. Die Keilschienen 5 liegen mit ihren Keilflächen 40 an den Keilflächen 28 der Winkelplatten 4 an. Sie haben zwei Durchgangsbohrungen 41 mit konischen Ansenkungen 42 zur Aufnahme des Kopfes der Senkschrauben 6. Der Gewindeeingriff zwischen Schraube 6 und Parallelogrammutter 7 ist selbstsichernd. Beim Drehen der Schrauben 6 wird daher zunächst die ursprünglich mit ihren Längsseiten parallel zur Längserstreckung der Profile 1, 2 eingeführte Mutter 7 mitgedreht, bis ihre Schmalseiten an der Innenseite der Profilschenkel 11 anliegen. Anschliessend wird die Mutter 7 gegen die Stege 12 angezogen, wobei sie mit je einem Vorsprung 45 längs ihren Schmalseiten die Nasen 14 der Stege 12 hintergreift. Dadurch wird verhindert, dass beim Anziehen der Schraube 6 durch die Wirkung der Keilschiene 5 die Schenkel 11 gespreizt werden. Im montierten Zustand sind die Aussenseiten 21 der Winkelplatten 4 bündig mit den Aussenseiten 15 der Profilschenkel 11.

Wenn die Schrauben 6 angezogen sind, sind die Stege 13 formschlüssig und selbsthemmend in den Nuten 22 verkeilt. Die Kraftübertragung zwischen den Profilen 1, 2 erfolgt daher über die Winkelplatten 4 direkt in die Profilstege 11. Dadurch können hohe Biegemomente in beiden Richtungen und erhebliche Zugkräfte zwischen den Profilen 1, 2 übertragen werden.

Die beschriebene Eckverbindung eignet sich vor allem für den Aufbau von Wagenkastengerippen für Schienenfahrzeuge und Busse und ermöglicht wegen ihrer hohen Festigkeit die überrollsichere Ausbildung solcher Gerippe.

Statt der beiden Keilschienen 5 kann auch eine einzige, L-förmig abgekantete Keilschiene verwendet werden. Dies hat den Vorteil, dass der Eckverbinder ein Einzelteil weniger hat.

## Patentansprüche

1. Eck-Verbindung eines ersten Profils (1) mit C-förmigem Anschluss mit einem im Winkel dazu angeordneten zweiten Profil (2) mit C-förmigem Anschluss mittels eines Eckverbinders (3), der zwei an den beiden Profilen (1,2) anliegende Schenkel (20) aufweist, die mittels je mindestens einer Schraube (6) und einer zugehörigen Parallelogrammutter (7) mit den Profilen (1,2) verschraubt sind, wobei die Profile (1,2) zwei parallele Profilschenkel (11) und an beiden Profilschenkeln (11) auf ihrer dem jeweils andern Profilschenkel zugewandten Seite je einen ersten Steg (12) aufweisen und die Mutter (7) die beiden ersten Stege (12) des zugehörigen Profils (1,2) hintergreift und ihre Breite geringer ist als der Abstand der beiden ersten Stege (12) voneinander, dadurch gekennzeichnet, dass der Eckverbinder (3) aus zwei gegeneinander beweglichen Winkelstücken (4) besteht, die längs ihrer an den Profilen (1,2) anliegenden Schenkel (20) auf der dem komplementären Winkelstück (4) abgewandten Seite je eine Nut (22) und auf der gegenüberliegenden Seite eine Keilfläche (28) aufweisen, dass beide Profile (1,2) an beiden Profilschenkeln (11) je einen zum ersten Steg (12) parallelen zweiten Steg (13) haben, dass die zweiten Stege (13) formschlüssig in die Nuten (22) der Winkelstücke (4) eingreifen, und dass die Winkelstücke (4) durch mindestens eine Keilschiene (5) voneinander gespreizt sind, welche an den Keilflächen (28) anliegt und durch die Schrauben (6) gegen das zugehörige Profil (1,2) gespannt ist.

2. Verbindung nach Anspruch 1, dadurch gekennzeichnet, dass die ersten Stege (12) je eine vom freien Ende der Profilschenkel (11) abgewandte Nase (14) und die Parallelogrammuttern (5) längs ihren kurzen Seiten je einen die Nasen (14) hintergreifenden Vorsprung (45) aufweisen.

3. Verbindung nach Anspruch 1 oder 2, dadurch gekennzeichnet, dass die Nuten (22) und die zweiten Stege (13) keilförmig ausgebildet sind.

4. Verbindung nach Anspruch 3, dadurch gekennzeichnet, dass die Keilwinkel der Nuten (22) und zweiten Stege (13) selbsthemmend sind.

5. Winkelstück für einen Eckverbinder (3) zur Herstellung einer Verbindung gemäss einem der Ansprüche 1 bis 4 mit zwei im Winkel zueinander angeordneten Schenkeln (20) und einer zu der durch die Schenkel (20) definierten Ebene parallelen Aussenfläche (21), dadurch gekennzeichnet, dass die Schenkel (20) von der Aussenfläche (21) ausgehende, geradlinige Nuten (22) aufweisen, die durch Leisten (23) begrenzt sind, welche gegenüber der Aussenfläche (21) zurückversetzt sind, und dass die Schenkel (20) auf der der Aussenfläche (21) gegenüberliegenden Seite je eine gegenüber der Aussenfläche (21) geneigte, zur Längsrichtung der zugehörigen Nut (22) parallele Keilfläche (28) haben.

6. Winkelstück nach Anspruch 5, dadurch gekennzeichnet, dass die Nuten (22) einen keilförmigen Querschnitt haben.

7. Winkelstück nach Anspruch 6, dadurch gekennzeichnet, dass der Keilwinkel der Nuten (22) etwa 5° beträgt.

8. Winkelstück nach einem der Ansprüche 5 bis 7, dadurch gekennzeichnet, dass es gesenkgeschmiedet ist.

9. Winkelstück nach einem der Ansprüche 5 bis 8, dadurch gekennzeichnet, dass es aus einer Aluminiumlegierung besteht.

## Claims

1. Corner connection of a first profile (1) with a C-shaped prolongation to a second profile (2) with a C-shaped prolongation arranged at an angle thereto by means of a corner connector (3) which has two arms (20) which bear against the two profiles (1, 2) and are screwed to the profiles (1, 2) by means of at least one screw (6) and an associated parallelogram nut (7), the profiles (1, 2) having two parallel profile arms (11) and a first web (12) on both profile arms (11) on the side facing the other profile arm, and the nut (7) engaging behind the two first webs (12) of the associated profile (1, 2) and its width being less than the distance between the two first webs (12), characterised in that the corner connector (3) consists of two angular elements (4) movable with respect to one another each having a groove (22) along their arms (20) bearing against the profiles (1, 2) on the side remote from the complementary angular element (4) and a wedge surface (28) on the opposite side, that the two profiles (1, 2) have a second web (13) parallel to the first web (12) on the two profile arms (11), that the second webs (13) engage in a positive manner in the grooves (22) of the angular elements (4) and that the angular elements (4) are spread apart by at least one wedge rail (5) which bears against the wedge surfaces (28) and is tensioned against the associated profile (1, 2) by the screws (6).

2. Connection according to claim 1, characterised in that the first webs (12) each have a nose (14) remote from the free end of the profile arms (11) and the parallelogram nuts (5) each have a projection (45) engaging behind the noses (14) along their short sides.

3. Connection according to claim 1 or claim 2, characterised in that the grooves (22) and the second webs (13) are wedge-shaped.

4. Connection according to claim 3, characterised in that the wedge angles of the grooves (22) and the second webs (13) are self-locking.

5. Angular element for a corner connector (3) for assembling a connection according to one of claims 1 to 4, comprising two arms (20) arranged at an angle to one another and an outer surface (21) parallel to the plane defined by the arms (20), characterised in that the arms (20) have rectilinear grooves (22) starting from the outer surface (21) and defined by strips (23) which are set back with respect to the outer surface (21) and that the arms (20) each have a wedge surface (28) inclined with respect to the outer surface (21) and parallel to the longitudinal direction of the associated groove (22) on the side opposite the outer surface (21).

6. Angular element according to claim 5, characterised in that the grooves (22) have a wedge-shaped cross section.

7. Angular element according to claim 6, characterised in that the wedge angle of the grooves (22) is approximately 5°.

8. Angular element according to one of claims 5 to 7, characterised in that it is drop forged.

9. Angular element according to one of claims 5 to 8, characterised in that it consists of an aluminium alloy.

## Revendications

1. Assemblage angulaire d'un premier profilé (1) comportant un raccord en forme de C avec un second profilé (2) comportant un raccord en forme de C et qui forme un angle avec le précédent, à l'aide d'un élément d'assemblage angulaire (3) qui présente deux branches (20) qui reposent sur les deux profilés (1, 2) et qui sont vissées avec les profilés (1, 2) chacune au moyen d'au moins une vis (6) et d'un écrou à parallélogramme (7) associé, les profilés (1, 2) présentant deux branches de profilé (11) parallèles et sur chacune des deux branches de profilé (11) une première nervure (12) sur le côté de la branche dirigé vers l'autre branche de profilé, et l'écrou (7) s'accrochant derrière les deux premières nervures (12) du profilé (1, 2) correspondant et étant de largeur inférieure à la distance entre les deux premières nervures (12), caractérisé en ce que l'élément d'assemblage angulaire (3) consiste en deux pièces angulaires (4) mobiles l'une par rapport à l'autre qui présentent chacune le long de leur branche (20) qui repose sur les profilés (1, 2) une rainure (22) sur le côté opposé à la pièce angulaire (4) complémentaire et une surface de calage (28) sur le côté opposé, en ce que les deux profilés (1, 2) comportent au niveau de chacune des deux branches de profilé (11) une seconde nervure (13) parallèle à la première nervure (12), en ce que les secondes nervures (13) pénètrent par assemblage de forme dans les rainures (22) des pièces angulaires (4), et en ce que les pièces angulaires (4) sont écartées l'une de l'autre par au moins une barre de calage (5) qui repose sur les surfaces de calage (28) et qui est serrée par les vis (6) contre le profilé (1, 2) correspondant.

2. Assemblage selon la revendication 1, caractérisé en ce que les premières nervures (12) comportent chacune un talon (14) opposé à l'extrémité libre des branches de profilé (11) et en ce que les écrous à parallélogramme (5) présentent le long de chacun de leurs côtés courts une protubérance (45) qui s'accroche derrière les talons (14).

3. Assemblage selon la revendication 1 ou 2, caractérisé en ce que les rainures (22) et les secondes nervures (13) sont en forme de coins.

4. Assemblage selon la revendication 3, caractérisé en ce que les angles de coin des rainures (22) et des secondes nervures (13) sont autobloquants.

5. Pièce angulaire pour élément d'assemblage angulaire (3) pour la formation d'un assemblage selon l'une des revendications 1 à 4, comportant deux branches (20) faisant un angle entre elles et une surface externe (21) parallèle au plan défini par les branches (20), caractérisée en ce que les branches (20) présentent des rainures (22) rectilignes qui prennent naissance sur la surface externe (21), qui sont limitées par des rebords (23) qui sont en retrait par rapport à la surface externe (21), et en ce que les branches (20) comportent chacune sur le côté opposé à la surface externe (21) une surface de calage (28) inclinée par rapport à la surface externe (21) et parallèle à la direction longitudinale de la rainure (22) correspondante.

6. Pièce angulaire selon la revendication 5, caractérisée en ce que les rainures (22) ont une section transversale en forme de coin.

7. Pièce angulaire selon la revendication 6, caractérisée en ce que l'angle de coin des rainures (22) est égal à environ 5°.

8. Pièce angulaire selon l'une des revendications 5 à 7, caractérisée en ce qu'elle est matricée.

9. Pièce angulaire selon l'une des revendications 5 à 8, caractérisée en ce qu'elle consiste en un alliage d'aluminium.
